# EUROPEAN PATENT APPLICATION

(11) **EP 4 629 119 A1**
(43) Date of publication of application: **08.10.2025**
(21) Application number: 23903739.3
(22) Date of filing: 31.10.2023
(51) Int. Cl.: G06F 21/62, G06F 21/60, G06F 16/958

(54) **ELECTRONIC DEVICE AND METHOD FOR OPERATING SAME**

(30) Priority: 16.12.2022 KR 20220177081
(71) Applicant: Samsung Electronics Co., Ltd., Suwon-si, Gyeonggi-do 16677 (KR)
(72) Inventor: POPOV, Artem, Kyiv, 01032 (UA); PETRYCHENKO, Vitalii, Kyiv, 01032 (UA); PEDAN, Stanislav, Kyiv, 01032 (UA); ZEMLIANOI, Maksym, Kyiv, 01032 (UA); KONOVAL, Oleg, Kyiv, 01032 (UA); BRYNZA, Volodymyr, Kyiv, 01032 (UA)
(74) Representative: Gulde & Partner
(86) International application number: PCT/KR2023/017109
(87) International publication number: WO 2024/128536

(57) **Abstract**

An electronic device is provided. The electronic device may comprise a display, a communication circuit, and at least one processor functionally connected to the communication circuit and the display. The at least one processor may be configured to: identify, when content to be shared with an external electronic device is displayed on the display, whether the content includes personal information data requiring personal information protection; detect at least one piece of personal information data which is to be subjected to personal information protection processing from the content on the basis of the content including personal information requiring personal information protection; delete the at least one piece of personal information data from the content; insert alternative data corresponding to the deleted at least one piece of personal information data into the content on the basis of the type of the at least one piece of personal information data; display content having the alternative data inserted therein on the display; share the content having the alternative data inserted therein with the external electronic device through the communication circuit; and delete the alternative data from the content, if a pre-designated condition is satisfied, and restore the deleted at least one piece of personal information data.

## Description

### [Technical Field]

The disclosure relates to an electronic device and a method for operating same and, more particularly, to an electronic device configured to protect personal information and a method for operating same.

### [Background Art]

As the use of electronic devices has increased in recent years, the problem of personal information leakage such as Personally Identifying Information (PII) or sensitive personal information (SPI) due to content sharing through electronic devices has become serious. Images containing personal information are shared through posts on social media networks or messenger chat windows, etc. Furthermore, data shared in this way may be re-shared or used without the user's intention, and thus, measures to prevent this are required.

In government-related applications or mobile banking applications, measures such as inserting watermarks or disabling screenshot functions are being used to prevent unauthorized theft and leakage of personal information. However, even when using applications that do not provide such functions, measures to protect personal information in the electronic device itself are required to protect personal information in the content.

### [Detailed Description of the Invention]

### [Technical Solution]

Various embodiments of the disclosure may provide an electronic device configured to protect personal information within content to prevent personal information from being leaked when sharing content containing personal information on the electronic device, and a method for operating same.

According to an aspect of the disclosure, an electronic device is provided. The electronic device may include: a display; a communication circuit; and at least one processor functionally connected to the communication circuit and the display, wherein the at least one processor is configured to: in case of displaying content on the display to be shared with an external electronic device, identify whether the content includes personal information data requiring personal information protection; based on the content including personal information requiring personal information protection, detect from the content at least one piece of personal information data to which a personal information protection processing is to be performed; delete the at least one piece of personal information data from the content, and based on a type of the at least one piece of personal information data, insert alternative data corresponding to the deleted at least one piece of personal information data into the content; display the content having the alternative data inserted therein on the display; share the content having the alternative data inserted therein with the external electronic device through the communication circuit; and when a preconfigured condition is satisfied, delete the alternative data from the content and restore the deleted at least one piece of personal information data.

According to an aspect of the disclosure, a method for operating an electronic device is provided. The method for operating an electronic device may include: in case of displaying content one the display to be shared with an external electronic device, identifying whether the content contains personal information data that requires personal information protection; based on the content including personal information requiring personal information protection, detecting from the content at least one piece of personal information data to which a personal information protection processing is to be performed; deleting the at least one piece of personal information data from the content, based on a type of the at least one piece of personal information data, and inserting alternative data corresponding to the deleted at least one piece of personal information data into the content; displaying the content having the alternative data inserted on the display; and sharing the content having the alternative data inserted therein with the external electronic device, and in case a preconfigured condition is satisfied, deleting the alternative data from the content and restoring the deleted at least one piece of personal information data.

According to an aspect of the disclosure, a non-transitory computer-readable storage medium configured to store one or more programs is provided. In the storage medium, the one or more programs may include instructions, when executed by at least one processor of an electronic device, enabling the electronic device to: in case of displaying content on the display to be shared with an external electronic device, identify whether the content contains personal information data that requires personal information protection; based on the content including personal information requiring personal information protection, detect from the content at least one piece of personal information data to which a personal information protection processing is to be performed; delete the at least one piece of personal information data from the content, and based on a type of the at least one piece of personal information data, insert alternative data corresponding to the deleted at least one piece of personal information data into the content; display the content having the alternative data inserted on the display; and share the content having the alternative data inserted therein with the external electronic device through the communication circuit, and in case a preconfigured condition is satisfied, delete the alternative data from the content and restore the deleted at least one piece of personal information data.

### [Brief Description of Drawings]

FIG. 1 is a block diagram of an electronic device in a network environment according to an embodiment of the disclosure;
FIG. 2 is a block diagram of an electronic device according to an embodiment of the disclosure;
FIG. 3 is a flowchart for explaining the operation of an electronic device according to an embodiment of the disclosure;
FIG. 4 is a flowchart for explaining the operation of an electronic device according to an embodiment of the disclosure;
FIGS. 5A, 5B, and 5C are diagrams for explaining the operation of an electronic device according to an embodiment of the disclosure;
FIG. 6 is a diagram for explaining the operation of an electronic device according to an embodiment of the disclosure;
FIG. 7 is a diagram for explaining the operation of an electronic device according to an embodiment of the disclosure;
FIG. 8 is a diagram for explaining the operation of an electronic device according to an embodiment of the disclosure;
FIG. 9 is a diagram for explaining the operation of an electronic device according to an embodiment of the disclosure; and
FIG. 10 is a diagram for explaining the operation of an electronic device according to an embodiment of the disclosure.

It should be noted that throughout the diagrams, similar reference numbers are used to describe identical or similar elements, features and structures.

### [Mode for Carrying out the Invention]

The following description with reference to the attached diagrams is provided to facilitate a comprehensive understanding of various embodiments of the disclosure defined by the claims and the equivalents thereof. Although various specific details are included to aid this understanding, these should be considered illustrative only. Accordingly, a person skilled in the art will recognize that various changes and modifications of the various embodiments described herein can be made without departing from the scope and spirit of the invention. Additionally, for the sake of clarity and brevity, the descriptions of a well-known function and structure may be omitted.

The terms and words used in the following description and claims are not limited to their bibliographic meanings, but are merely used by the inventor to enable a clear and consistent understanding of the disclosure. Accordingly, it should be obvious to a person skilled in the art that the following description of various embodiments of the disclosure is provided for illustrative purposes only and not for the purpose of limiting the disclosure, as defined by the appended claims and their equivalents.

Unless the context clearly indicates otherwise, the singular forms "a," "an," and "the" should be understood to include plural referents. Therefore, for example, a reference to a "part surface" includes a reference to one or more such surfaces.

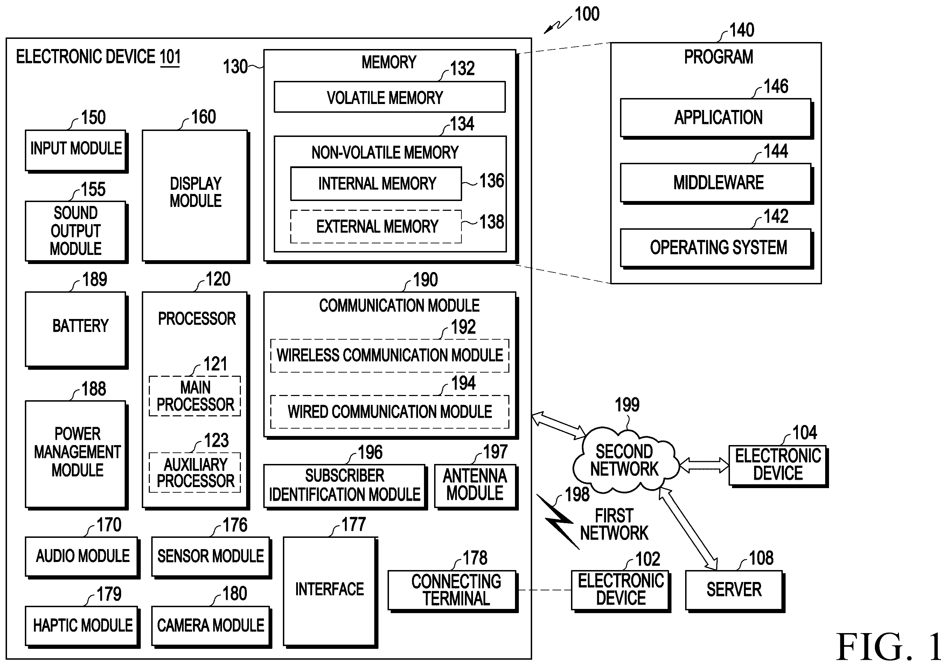

FIG. 1 is a block diagram illustrating an electronic device in a network environment according to the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

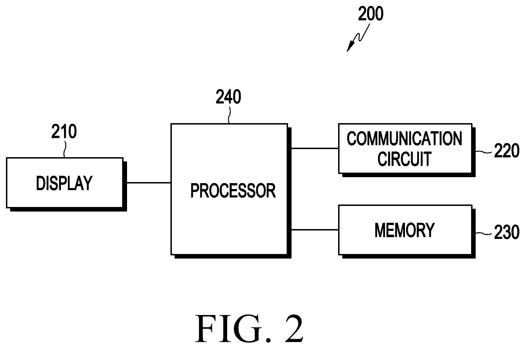

FIG. 2 is a block diagram illustrating an electronic device 200 according to an embodiment of the disclosure.

Referring to FIG. 2, the electronic device 200 (e.g., the electronic device 101 of FIG. 1) may include a display 210, a communication circuit 220, memory 230, and/or a processor 240.

In an embodiment, under the control of the processor 240, the display 210 may display various contents. In an embodiment, under the control of the processor 240, the display 210 may display information produced by the processor 240, information transmitted and/or received via the communication circuit 220, and the like. In an embodiment, the display 210 may be included in the display module 160 of FIG. 1.

In an embodiment, the communication circuit 220 may communicate with a server (e.g., the server 108 of FIG. 1) or an external electronic device (e.g., the electronic device 102 or the electronic device 104 of FIG. 1) using various communication methods. In an embodiment, the communication circuit 220 may receive various contents from an external electronic device or a server under the control of the processor 240. In an embodiment, the communication circuit 220 may be included in the communication module 190 of FIG. 1.

In an embodiment, the memory 230 may store information transmitted and/or received by the communication circuit 220 and information produced by the processor 240. According to various embodiments, the memory 230 may store information, a command, and/or an instruction for connecting to a server or external electronic device.

In an embodiment, the memory 230 may include volatile memory or non-volatile memory and may be implemented substantially identically or similarly to the memory 130 of FIG. 1.

According to an embodiment, the memory 230 may store an application (e.g., a function or a program) for personal information protection processing to protect content to be transmitted to a server or an external electronic device.

In an embodiment, the processor 240 may be included in the processor 120 of FIG. 1. In an embodiment, the processor 240 may include one or more processors.

In an embodiment, the processor 240 may control the overall operation of the electronic device 201 and may be identical to the processor 120 of FIG. 1 or may perform at least one function or operation performed by the processor 120.

In an embodiment, the processor 240 may execute commands (e.g., instructions) for executing an application for personal information protection processing stored in the memory 130 to implement a software module illustrated in FIG. 2, and may control hardware related to the function of the software module (e.g., the sensor module 176 or the communication module 190 of FIG. 1).

According to an embodiment, the processor 240 may control a display screen to display content to be shared with a server or an external electronic device or content stored in memory. In an embodiment, in case that the content displayed on the display screen for sharing includes a preconfigured type of personal information data, the processor 240 may determine that personal information protection processing is required for the content displayed on the screen, and may perform personal information protection processing for the content accordingly. For example, in case that the content displayed on the screen includes sensitive personal information such as personal identification information such as various license numbers or resident registration numbers, phone numbers, addresses, card numbers, etc., the processor 240 may determine that personal information protection processing is necessary for the content displayed on the screen.

According to an embodiment, the processor 240 may analyze content that is determined to require personal information protection processing, may detect a preconfigured type of protection processing target data from the content, and may classify the detected protection processing target data by the preconfigured type. According to an embodiment, the processor 240 may apply personal information protection processing to each detected protection processing target data based on the classified type.

In an embodiment, based on identifying that the type of personal information protection processing target data is a text such as a number or a character, the processor 240 may replace the protection processing target data with a pre-designated random text having a font similar to that of the original data so that the replaced random text is visually indistinguishable from the original data. In one embodiment, the processor 240 may confirm that the type of the personal information protection processing target data is text, such as a number or a character, by using optical character recognition technology, such as converting text into a computer-readable string.

In an embodiment, based on the confirmation that the type of the personal information protection processing target data is an image, such as a photograph or a signature, the processor 240 may replace the personal information protection processing target data with a pre-designated random image having a similar parameter (e.g., style, screen brightness, white balance, sharpness, etc.) to the original data so that the replaced random image is visually indistinguishable from the original data,

In an embodiment, the processor 240 may encrypt the original data of the protected data and store the same in memory allocated to a trusted area in the electronic device or in an external server requiring authentication, in order to restore the protected data at a later time.

In the disclosure, for convenience of explanation, static content such as a text and an image is used as an example of content, but it is obvious that the same technical idea can be applied to dynamic content such as video. Additionally, although the disclosure has described an example in which text is written using a number and an alphabetic character, it is obvious that the text can include other special characters and various characters used in other languages. In addition, although a text and an image are described separately in the disclosure, the disclosure is not limited thereto, and it is obvious to a person skilled in the art that the same technical idea can be applied even when different types of content are displayed simultaneously on one screen.

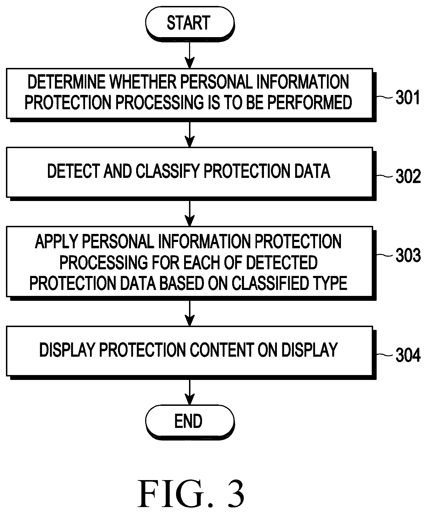

FIG. 3 is a flowchart for explaining the operation of an electronic device according to an embodiment of the disclosure. In an embodiment, an electronic device may be substantially the same electronic device as the electronic device 101 of FIG. 1 or the electronic device 200 of FIG. 2. In an embodiment, an external electronic device may be substantially the same electronic device as the electronic device 102 or the electronic device 104 of FIG. 1. In an embodiment, a server may be substantially the same device as the server 108 of FIG. 1.

Referring to FIG. 3, in operation 301, the electronic device may display, on a display screen, content that is intended to be shared with a server or an external electronic device, or content stored in memory. In an embodiment, in case that the content displayed on the display screen includes a preconfigured type of data, the electronic device may determine that personal information protection processing is required for the content displayed on the display screen and may perform personal information protection processing accordingly.

According to an embodiment, the electronic device may identify whether the content displayed on the display screen is a preconfigured type of content (e.g., a credit card, various driver's licenses, a passport, an identification card, a ticket, a medical document, etc.). For example, in case that the content displayed on the display screen includes personal identification information such as various license numbers, passport numbers, and resident registration numbers, or sensitive personal information such as various passwords, phone numbers, addresses, card numbers, barcodes, and quick response (QR) codes, the electronic device may determine that the content displayed on the display screen requires personal information protection processing.

In operation 302, the electronic device may analyze the content displayed on the display screen to detect a configured type of protection processing target data from the content, and may classify the detected protection processing target data by the preconfigured type. In an embodiment, the electronic device may analyze the content based on various computer vision approaches.

In operation 303, the electronic device may apply personal information protection processing to each detected protection processing target data based on the classified type.

According to an embodiment, based on the confirmation that the type of the personal information protection processing target data is a text such as a number and a character, the electronic device may replace the protection processing target data with a pre-designated random text having a font similar to the original data so that the replaced random text is visually indistinguishable from the original data. According to an embodiment, the random text may be a random text configured based on a pre-trained machine learning regular expression (regex) and a natural language processing model.

According to an embodiment, based on the confirmation that the type of the personal information protection processing target data is an image, such as a photograph or a signature, the electronic device may replace the personal information protection processing target data with a pre-designated random image having similar parameters (e.g., style, screen brightness, white balance, sharpness, saturation, etc.) to the original data so that the replaced random image is visually indistinguishable from the original data.

In an embodiment, the electronic device may encrypt the original data of the protected data and store the same in memory allocated to a trusted area in the electronic device or in an external server requiring authentication, in order to restore the protected data at a later time.

In operation 304, the electronic device may display, on the screen, the content that has been performed with personal information protection processing by inserting an alternative data, such as a random text or a random image. According to an embodiment, the protection processed content displayed on the screen may be displayed in a form that is visually indistinguishable from the original content. The electronic device may share the protected content with the external electronic device or the server.

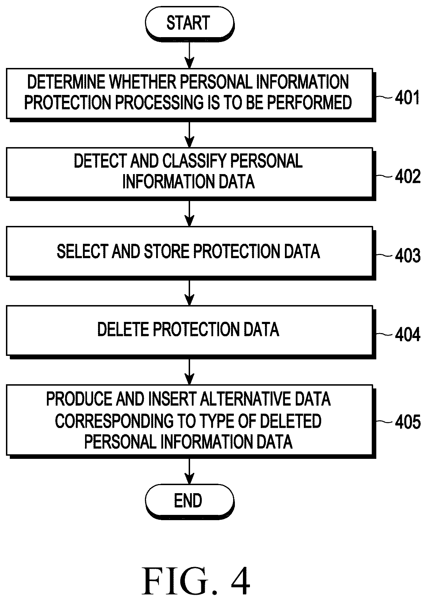

FIG. 4 is a flowchart for explaining the operation of an electronic device according to an embodiment of the disclosure. In an embodiment, an electronic device may be substantially the same electronic device as the electronic device 101 of FIG. 1 or the electronic device 200 of FIG. 2. In an embodiment, an external electronic device may be substantially the same electronic device as the electronic device 102 or the electronic device 104 of FIG. 1. In an embodiment, a server may be substantially the same device as the server 108 of FIG. 1.

Referring to FIG. 4, in operation 401, the electronic device may display, on a display screen, content to be shared with a server or an external electronic device or content stored in memory. In an embodiment, in case that the content displayed on the display screen includes a preconfigured type of personal information data, the processor 240 may determine that personal information protection processing is required for the content displayed on the display screen, and may perform a follow-up operation for personal information protection processing accordingly.

In operation 402, the electronic device may analyze the content to be shared with the server or the external electronic device to detect a preconfigured type of personal information data from the content, and may classify the detected personal information data by the preconfigured type. In an embodiment, the electronic device may designate a label for each piece of visual information, i.e., personal information data, shown through the content displayed on the display screen and may identify location coordinates for each piece of visual information.

In operation 403, based on a preconfigured condition being satisfied, user input, pre-entered user preference information, or the like, the electronic device may select protection processing target data which is a protection processing target, from among the labeled personal information data, may encrypt the selected protection processing target data, and may store the same in memory allocated to a trusted area in the electronic device or on an external server requiring user authentication.

For example, as the electronic device identifies that the content displayed on the display screen includes an image of a driver's license, the electronic device may select at least some of the data among the pieces of visual information included in the image of the driver's license, such as the name, license number, personal identification information (e.g., resident registration number, etc.), address, face photo, expiration date, date of issue, and signature, as personal information protection processing target data, may designate a label for each piece of selected protection processing target data, and may identify location coordinates for each piece of the data. In an embodiment, based on a preconfigured condition, user input, pre-input user preference information, or the like, the electronic device may select and classify personal information data corresponding to the face photo, name, and date of issue among the pieces of visual information included in the driver's license image as non-protection processing target data, and may select and classify personal information data corresponding to the address, license number, personal identification number, signature, and expiration date as protection processing target data.

For example, as the electronic device identifies that the content displayed on the display screen includes a credit card image, the electronic device may select pieces of visual information such as the card type, card number, name, and expiration date included in the credit card image as personal information protection processing target data, may designate a label for each piece of selected protection processing target data, and may identify location coordinates for each piece of the data. In an embodiment, based on a preconfigured condition, user input, pre-input user preference information, or the like, the electronic device may select and classify personal information data corresponding to the name among the pieces of visual information included in the driver's license image as non-protection processing target data, and may select and classify personal information data corresponding to the card number, expiration date, and signature as protection processing target data.

For example, as the electronic device identifies that the content displayed on the display screen includes an image of various tickets, such as a mobile gift certificate and an airline ticket, the electronic device may select pieces of visual information, such as date or expiration date, location or product name, reservation name, barcode or QR code, and the like included in the ticket image as personal information protection processing target data, designate labels for the data, and may identify location coordinates for each piece of data. In an embodiment, based on a preconfigured condition, user input, pre-input user preference information, or the like, the electronic device may select and classify personal information data corresponding to the reservation holder's name, date or expiration date, location or product name as non-protection processing target data, and may select and classify personal information data corresponding to the barcode or QR code as protection processing target data.

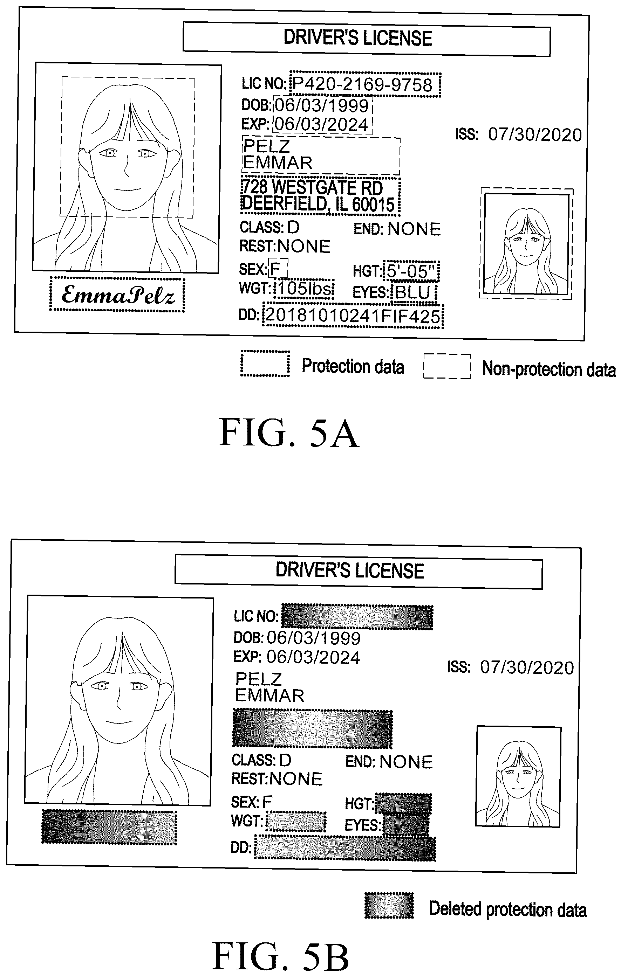

FIG. 5A illustrates an example wherein personal information data is selected and classified as non-protection processing target data and personal information data selected and classified as protection processing target data, for content including a driver's license image displayed on a display screen by an electronic device, according to an embodiment.

Referring to FIG. 5A, based on a preconfigured condition, user input, pre-input user preference information, or the like, the electronic device may select and classify personal information data corresponding to the face photo, name, gender, and date from the driver's license image displayed on the display screen as non-protection processing target data, and may select and classify personal information data corresponding to the license number, address, information related to physical characteristics, and signature as protection processing target data.

In operation 404, the electronic device may delete, from the content, at least one piece of personal information data that has been selected and classified as protection processing target data. According to an embodiment, the electronic device may delete, from the content, at least one piece of personal information data selected and classified as protection processing target data by using various methods such as cutting, blurring, and region duplication.

FIG. 5B illustrates an example where personal information data selected and classified as protection processing target data for content including a driver's license image displayed on a display screen by an electronic device is deleted from content, according to an embodiment.

Referring to FIG. 5B, based on a preconfigured condition, user input, pre-input user preference information, or the like, the electronic device may select and classify personal information data corresponding to a face photo, name, gender, and date from the driver's license image displayed on the display screen as non-protection processing target data, and may thus maintain the data in the content without any changes. Based on a preconfigured condition, user input, pre-input user preference information, or the like, the electronic device may select and classify personal information data corresponding to a license number, address, physical characteristic information, and signature from the driver's license image displayed on the display screen as protection processing target data and may delete the data from the content. In an embodiment, the electronic device may encrypt the deleted protection processing target data and store the same in memory allocated to a trusted area in the electronic device or on an external server requiring authentication.

In operation 405, the electronic device may produce alternative (fake) data corresponding to the type of the deleted personal information data and insert the produced alternative data into the corresponding location of the content to replace the deleted personal information data.

According to an embodiment, based on identifying that the type of protection processing target data is a text such as a number or a character, the electronic device may replace the protection processing target data with a pre-designated random text having a similar font to the original data so that the replaced random text is visually indistinguishable from the original data. In an embodiment, the random text may be a random text configured based on a pre-trained machine learning regular expression (regex) and a natural language processing model.

According to an embodiment, based on identifying that the type of personal information protection processing target data is an image, such as a photograph or a signature, the electronic device may use a generative adversarial nets (GAN) technology, or the like, tuned to a specific object type to replace the personal information protection processing target data with a pre-designated random image having similar parameters (e.g., style, screen brightness, white balance, sharpness, saturation, etc.) to the original data so that the replaced random image is visually indistinguishable with the original data.

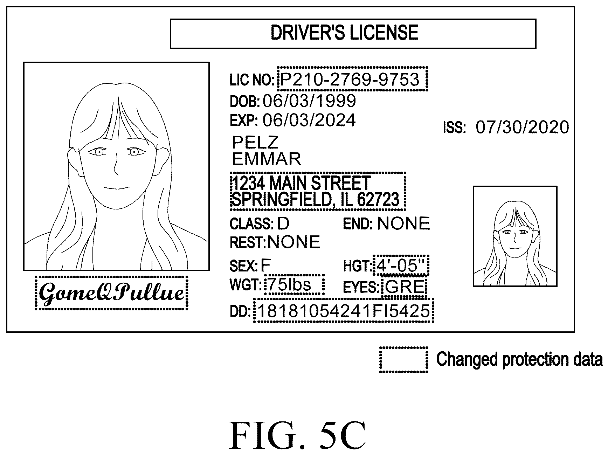

FIG. 5C illustrates an example in which, based on a preconfigured condition, user input, pre-input user preference information, or the like, personal information data selected and classified as protection processing target data in content including a driver's license image displayed on a display screen and thus deleted from the content is replaced with other random data, according to an embodiment.

Referring to FIG. 5C, based on a preconfigured condition, user input, pre-input user preference information, or the like, the electronic device may select and classify personal information data corresponding to a face photograph, name, gender, and date from content including a driver's license image displayed on a display screen as non-protection processing target data and may maintain the data in the content without any changes. Based on a preconfigured condition, user input, pre-input user preference information, or the like, the electronic device may select and classify personal information data corresponding to a license number, address, physical characteristic information, and signature from the content including the image of the driver's license displayed on the display screen as protection processing target data, may delete the data from the content, and may replace the deleted data with random data having different content from the original data.

According to an embodiment, in case of satisfying a pre-configured condition, the electronic device may perform a process of protecting at least some of personal information data in content, or restore protected personal information data to the original data by using personal information data encrypted and stored in memory or on a server.

For example, the electronic device may perform a process of protecting at least some of personal information data within the content based on time information preconfigured by a user, or restore protected personal information data to the original data by using personal information data encrypted and stored in memory or on a server based on time information preconfigured by the user.

According to an embodiment, the electronic device may perform a process of protecting personal information data based on a user input, or restore protected personal information data to the original data using personal information data encrypted and stored in memory or on a server based on the user input.

According to an embodiment, the electronic device may restore the protection processed personal information data to the original data by using the personal information data encrypted and stored in memory or on a server using global positioning system (GPS) coordinates or ultra-wideband (UWB) signals based on the protection processed personal information data.

In an embodiment, the electronic device may perform a process of protecting at least some of personal information data included in shared content based on the use of a pre-designated service or a pre-designated application, or may restore protection processed personal information data to the original data by using personal information data encrypted and stored in memory or on a server based on the use of a pre-designated service or a pre-designated application.

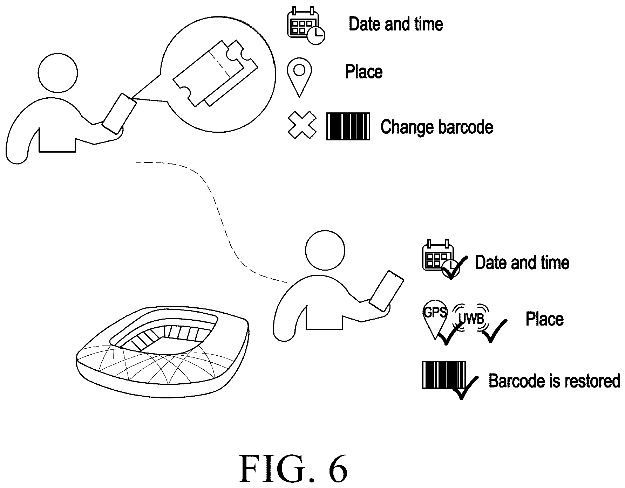

FIG. 6 is a diagram for explaining the operation of an electronic device according to an embodiment of the disclosure.

Referring to FIG. 6, the electronic device may purchase a baseball game ticket based on user input and store an image of the ticket in memory. The saved ticket image may include information about a baseball game, such as date and time information indicating the game schedule, venue information indicating the stadium location, and personal information data such as a barcode image. According to an embodiment, the electronic device may select and classify date and time information and location information as non-protection processing target data based on a preconfigured condition, user input, or pre-input user preference information, may select and classify a barcode image as protection processing target data, may delete and encrypt the barcode image, may store the same in memory in the electronic device or on an external server, and may change the deleted barcode image into a similar image. According to an embodiment, the electronic device may read and store date and time information and location information using a technique such as optical character recognition, and then use the information to restore the protection processed personal information data (i.e. the barcode image). For example, the electronic device may identify that the current date and time correspond to the date and time information included in the ticket image, and that the current user's location corresponds to the location information included in the ticket image. In an embodiment, the electronic device may identify the current user's location using GPS signals or UWB signals. In an embodiment, in case of identifying that the current date and time and the current user's location match all of the information included in the ticket image, the electronic device may delete the changed barcode image from the ticket image and restore the deleted barcode image to the original barcode image stored in memory or on a server.

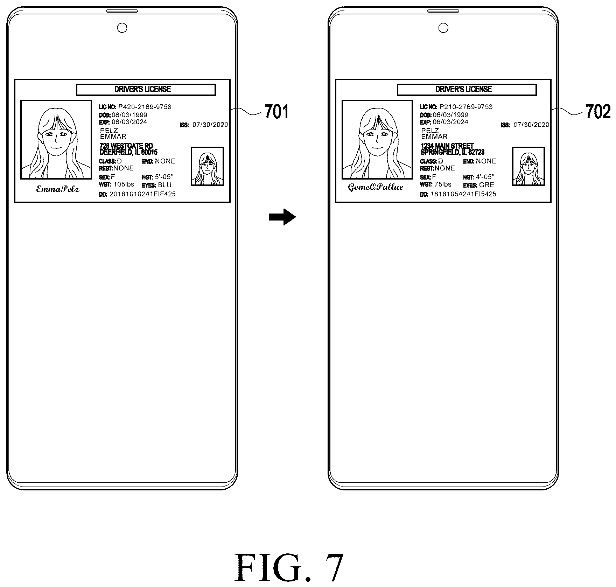

FIG. 7 is a diagram for explaining the operation of an electronic device according to an embodiment of the disclosure.

Referring to FIG. 7, content 701 shows original content displayed on a display screen of an electronic device, and content 702 shows changed content displayed on the electronic device at a time point when a pre-designated amount of time has elapsed after the sharing. According to an embodiment, the electronic device may share content including an identification card image to an external electronic device for the purpose of verifying personal information, etc. According to an embodiment, when content including personal information data to be protected is shared, the electronic device may be configured to automatically change the personal information data classified as protection target, after the content has been shared and a pre-designated amount of time has elapsed, based on user input, user configuration, or preconfigured information. Accordingly, at a time point when a pre-designated amount of time has elapsed after the sharing since the content was shared, it may be identified that the content 702 displayed on the electronic device is content in which personal information data classified as a protection target has been changed. In this way, the electronic device may prevent personal information from being stolen by others by specifying the lifespan of shared content.

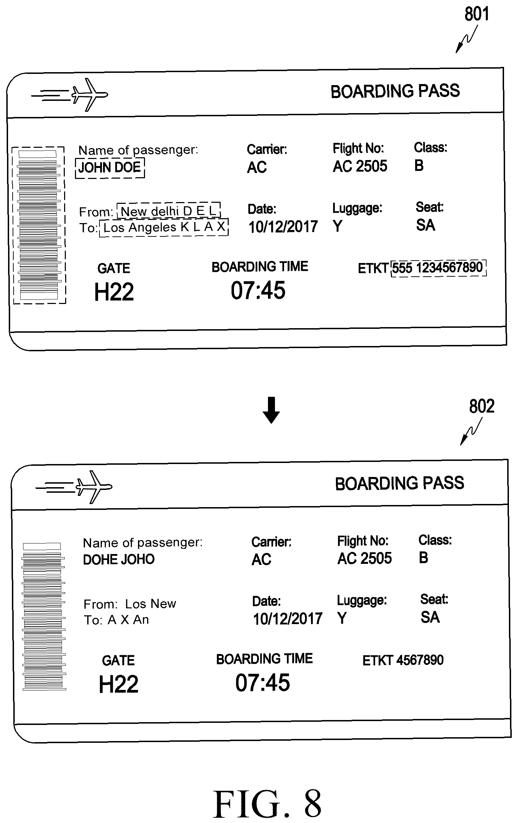

FIG. 8 is a diagram for explaining the operation of an electronic device according to an embodiment of the disclosure.

Referring to FIG. 8, content 801 shows original content displayed on an electronic device, and 802 shows the changed content displayed on the electronic device after at least some of personal information data included in the original content has been protection processed. According to an embodiment, the electronic device may provide candidate personal information data items to be protection processed, such as content 801, and may select the personal information data to be protected from among the candidate personal information data items based on user input. Accordingly, the electronic device may display only selected personal information data based on user input, such as the content 802, by changing the same to random data.

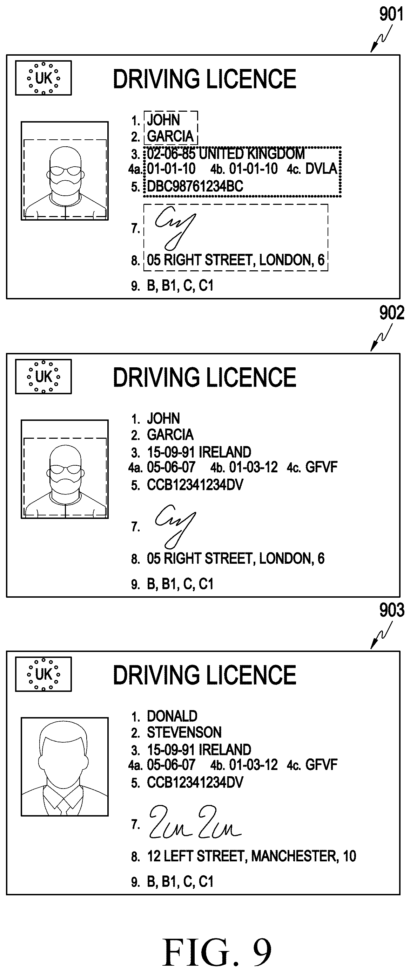

FIG. 9 is a diagram for explaining the operation of an electronic device according to an embodiment of the disclosure.

Referring to FIG. 9, content 901 shows shared content displayed on an electronic device, and content 902 and content 903 show changed content displayed on an electronic device after at least some of personal information protection data included in the shared content has been further protection processed. According to an embodiment, the content 901 may or may not include protection processed personal information data. According to an embodiment, the electronic device may configure different change times for each item of personal information data which is to be subjected to protection processing, such as the content 901. For example, the electronic device may configure items 3, 4, and 5 in the original content 901 to be changed after 2 hours from the time the content was shared, and items 1, 2, 7, and 8 and the face photo may be configured to be changed after 4 hours from the time the content was shared. Accordingly, after 2 hours from the time of sharing the content, the electronic device may change and display personal information data of items 3, 4, and 5, as in the content 902, and after 4 hours from the time of sharing the content, the electronic device may change and display items 1, 2, 7, and 8 and the photo, as in the content 903.

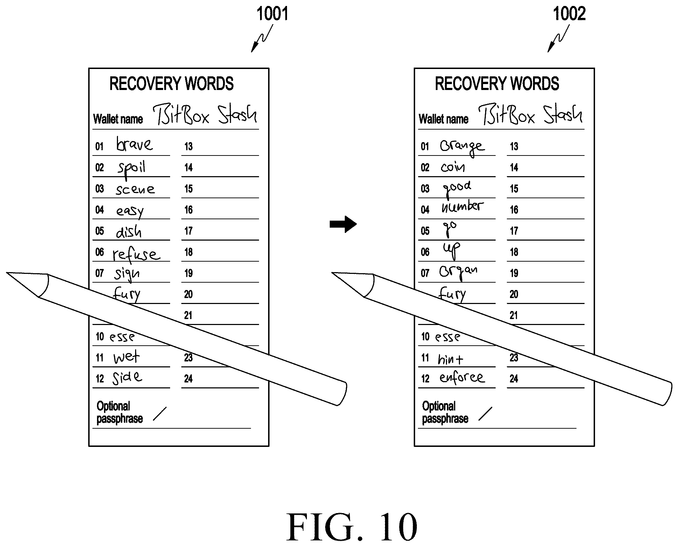

FIG. 10 is a diagram for explaining the operation of an electronic device according to an embodiment of the disclosure.

Referring to FIG. 10, content 1001 shows original content displayed on an electronic device, and content 1002 shows changed content displayed on the electronic device after at least some of personal information data included in the original content has been protection processed. According to an embodiment, the electronic device may store a mnemonic phrase within content displayed on the electronic device as an image. In an embodiment, the mnemonic phrase may include handwriting. In case that content including a mnemonic phrase image based on user input is shared to an external electronic device or server, the electronic device may produce an alternative mnemonic phrase image corresponding to the mnemonic phrase image included in the shared content, insert the alternative mnemonic phrase image in place of the original mnemonic phrase image, and share the same with the external electronic device or server.

An electronic device 101 according to an embodiment may include: a display 210; a communication circuit 220; and at least one processor 240 functionally connected to the communication circuit and the display, wherein the at least one processor is configured to: in case of displaying content on the display to be shared with an external electronic device, identify whether the content includes personal information data requiring personal information protection; based on the content including personal information requiring personal information protection, detect at least one piece of personal information data which is to be subjected to personal information protection processing is to be performed from the content; delete the at least one piece of personal information data from the content and, based on the type of the at least one piece of personal information data, insert alternative data corresponding to the deleted at least one piece of personal information data into the content; display the content having the alternative data inserted therein on the display; and share the content having the alternative data inserted therein with the external electronic device through the communication circuit and, in case of satisfying a preconfigured condition, delete the alternative data from the content and restore the deleted at least one piece of personal information data.

In an embodiment, the at least one processor may be configured to: configure a label for the at least one piece of personal information data; and encrypt and store the deleted at least one piece of personal information data together with location information of the deleted at least one piece of personal information data.

In an embodiment, the at least one processor may be configured to detect from the content at least one piece of personal information data to which the personal information protection processing is to be performed, based on at least one of a preconfigured condition, user input, or preconfigured user preference information.

In an embodiment, the at least one processor may be configured to delete at least some of personal information data selected based on user input from among the detected at least one piece of personal information data.

In an embodiment, the at least one processor may be configured to: detect from the content at least two pieces of personal information data to which the personal information protection processing is to be performed; and delete the at least two pieces of personal information data at pre-designated different times, respectively.

In an embodiment, the at least one processor may be configured to: detect from the content at least two pieces of personal information data to which the personal information protection processing is to be performed; delete first data among the at least two pieces of personal information data and share the content having the first alternative data inserted therein for the first data to the external electronic device; and configure properties of second data such that the second data of the at least two pieces of personal information data is deleted from the shared content and second alternative data for the second data is inserted.

In an embodiment, the at least one processor may be configured to delete the alternative data, based on at least one of a preconfigured condition, user input, or preconfigured user preference information.

In an embodiment, a case where the preconfigured condition is satisfied may include at least one of a case where user input requesting to restore the deleted at least one piece of personal information data is received, a case where preconfigured user preference information is matched, a case where a preconfigured time is reached, or a case where location information of the electronic device matches preconfigured location information.

In an embodiment, the at least one processor may be configured to produce the alternative data having a font corresponding to the deleted text and insert the alternative data into the content, based on the deleted at least one piece of personal information data being text.

In an embodiment, the at least one processor may be configured to produce the alternative data having a parameter corresponding to the deleted image and insert the alternative data into the content, based on the deleted at least one piece of personal information data being an image.

According to an embodiment, a method for operating an electronic device may include: in case of displaying content on the display to be shared with an external electronic device, identifying (301) whether the content contains personal information data that requires personal information protection; based on the content including personal information requiring personal information protection, detecting (302) from the content at least one piece of personal information data to which personal information protection processing is to be performed; deleting (303) the at least one piece of personal information data from the content, based on the type of the at least one piece of personal information data, and inserting alternative data corresponding to the deleted at least one piece of personal information data into the content; displaying (304) the content having the alternative data inserted on the display; and sharing the content having the alternative data inserted therein with the external electronic device, and in case a preconfigured condition is satisfied, deleting the alternative data from the content and restoring the deleted at least one piece of personal information data.

In an embodiment, the method may further include configuring a label for the at least one piece of personal information data, and encrypting and storing (403) the deleted at least one piece of personal information data together with location information of the deleted at least one piece of personal information data.

In an embodiment, the detecting may include detecting from the content at least one piece of personal information data to which the personal information protection processing is to be performed, based on at least one of a preconfigured condition, user input, or preconfigured user preference information.

In an embodiment, the deleting may include deleting at least some of personal information data selected based on user input among the detected at least one piece of personal information data.

In an embodiment, the detecting may include detecting from the content at least two pieces of personal information data to which the personal information protection processing is to be performed, and the deleting operation may delete the at least two pieces of personal information data at pre-designated different times, respectively.

In an embodiment, the method may further include: detecting from the content at least two pieces of personal information data to which the personal information protection processing is to be performed; and deleting first data among the at least two pieces of personal information data, inserting first alternative data for the first data, and configuring properties of second data such that the second data of the at least two pieces of personal information data is deleted after a pre-designated time has elapsed and second alternative data for the second data is inserted.

In an embodiment, the deleting of the alternative data may include deleting the alternative data, based on at least one of a preconfigured condition, user input, or preconfigured user preference information.

In an embodiment, a case where the preconfigured condition is satisfied may include at least one of a case where user input requesting to restore the deleted at least one piece of personal information data is received, a case where preconfigured user preference information is matched, a case where a preconfigured time is reached, or a case where location information of the electronic device matches preconfigured location information.

In an embodiment, the inserting may include producing the alternative data having a font corresponding to the deleted text and insert the alternative data into the content, based on the deleted at least one piece of personal information data being text.

In an embodiment, the inserting may include producing the alternative data having a parameter corresponding to the deleted image and insert the alternative data into the content, based on the deleted at least one piece of personal information data being an image.

The disclosure is as described above in a preferred context with reference to various embodiments. Accordingly, those skilled in the art will appreciate that the disclosure may be modified in various forms and details without departing from the essential characteristics of the disclosure. Therefore, the disclosed embodiments should be considered as illustrative rather than restrictive. The spirit and scope of the disclosure should be defined by the appended claims, instead of the foregoing description, and all differences within the equivalency thereof should be construed as falling within the disclosure.

## Claims

1. An electronic device (101) comprising:
a display (210);
a communication circuit (220); and
at least one processor (240) functionally connected to the communication circuit and the display,
wherein the at least one processor is configured to:
in case of displaying content on the display to be shared with an external electronic device, identify whether the content comprises personal information data requiring personal information protection;
based on the content comprising personal information requiring personal information protection, detect from the content at least one piece of personal information data to which a personal information protection processing is to be performed;
delete the at least one piece of personal information data from the content, and based on a type of the at least one piece of personal information data, insert alternative data corresponding to the deleted at least one piece of personal information data into the content;
display the content having the alternative data inserted therein on the display; and
share the content having the alternative data inserted therein with the external electronic device through the communication circuit and, in case of satisfying a preconfigured condition, delete the alternative data from the content and restore the deleted at least one piece of personal information data.

2. The electronic device of claim 1, wherein the at least one processor is configured to:
configure a label for the at least one piece of personal information data; and
encrypt and store the deleted at least one piece of personal information data together with location information of the deleted at least one piece of personal information data.

3. The electronic device of claim 1 or 2, wherein the at least one processor is configured to:
detect from the content the at least one piece of personal information data to which the personal information protection processing is to be performed, based on at least one of a preconfigured condition, user input, or preconfigured user preference information; and
delete at least some of personal information data selected based on user input from among the detected at least one piece of personal information data.

4. The electronic device of one of claims 1 to 3, wherein the at least one processor is configured to:
detect from the content at least two pieces of personal information data to which the personal information protection processing is to be performed; and
delete the at least two pieces of personal information data at pre-designated different times, respectively.

5. The electronic device of one of claims 1 to 3, wherein the at least one processor is configured to:
detect from the content at least two pieces of personal information data to which the personal information protection processing is to be performed; and
delete first data among the at least two pieces of personal information data, share the content having first alternative data inserted therein for the first data to the external electronic device, and configure properties of second data such that the second data of the at least two pieces of personal information data is deleted from the shared content and second alternative data for the second data is inserted.

6. The electronic device of one of claims 1 to 3, wherein the at least one processor is configured to delete the alternative data, based on at least one of a preconfigured condition, user input, or preconfigured user preference information.

7. The electronic device of one of claims 1 to 3, wherein a case where the preconfigured condition is satisfied comprises at least one of a case where user input requesting to restore the deleted at least one piece of personal information data is received, a case where preconfigured user preference information is matched, a case where a preconfigured time is reached, or a case where location information of the electronic device matches preconfigured location information.

8. The electronic device of one of claims 1 to 7, wherein the at least one processor is configured to:
based on the deleted at least one piece of personal information data being text, produce the alternative data having a font corresponding to the deleted text and insert the alternative data into the content,; and
based on the deleted at least one piece of personal information data being an image, produce the alternative data having a parameter corresponding to the deleted image and insert the alternative data into the content.

9. A method for operating an electronic device, the method comprising:
in case of displaying content on the display to be shared with an external electronic device, identifying (301) whether the content contains personal information data that requires personal information protection;
based on the content including personal information requiring personal information protection, detecting (302) from the content at least one piece of personal information data to which a personal information protection processing to be performed;
deleting (303) the at least one piece of personal information data from the content, based on a type of the at least one piece of personal information data, and inserting alternative data corresponding to the deleted at least one piece of personal information data into the content;
displaying (304) the content having the alternative data inserted on the display; and
sharing the content having the alternative data inserted therein with the external electronic device, and at a time point when a pre-designated amount of time has elapsed after the sharing, deleting the alternative data from the content and restoring the deleted at least one piece of personal information data.

10. The method of claim 9, further comprising configuring a label for the at least one piece of personal information data, and encrypting and storing the deleted at least one piece of personal information data together with location information of the deleted at least one piece of personal information data 403.

11. The method of claim 9 or 10, wherein the detecting comprises detecting from the content the at least one piece of personal information data to which the personal information protection processing is to be performed, based on at least one of a preconfigured condition, user input, or preconfigured user preference information, and
wherein the deleting comprises deleting at least some of personal information data selected based on user input among the detected at least one piece of personal information data.

12. The method of one of claims 9 to 11, wherein the detecting comprises detecting from the content at least two pieces of personal information data to which the personal information protection processing is to be performed, and
wherein the deleting comprises deleting the at least two pieces of personal information data at pre-designated different times, respectively.

13. The method of one of claims 9 to 12, further comprising:
detecting from the content at least two pieces of personal information data to which the personal information protection processing is to be performed;
deleting first data among the at least two pieces of personal information data, inserting first alternative data for the first data, and configuring properties of second data such that the second data of the at least two pieces of personal information data is deleted after a pre-designated time has elapsed and second alternative data for the second data is inserted,
wherein the deleting of the alternative data comprises deleting the alternative data, based on at least one of a preconfigured condition, user input, or preconfigured user preference information.

14. The method of one of claims 9 to 12, wherein a case where the preconfigured condition is satisfied comprises at least one of a case where user input requesting to restore the deleted at least one piece of personal information data is received, a case where preconfigured user preference information is matched, a case where a preconfigured time is reached, or a case where location information of the electronic device matches preconfigured location information.

15. The method of one of claims 9 to 14, wherein the inserting comprises:
based on the deleted at least one piece of personal information data being text, producing the alternative data having a font corresponding to the deleted text and inserts the alternative data into the content; and
based on the deleted at least one piece of personal information data being an image, producing the alternative data having a parameter corresponding to the deleted image and inserts the alternative data into the content.
